# EUROPEAN PATENT SPECIFICATION

(11) **EP 1 143 317 B1**
(45) Date of publication and mention of the grant of the patent: **12.05.2004**
(21) Application number: 01202384.2
(22) Date of filing: 25.02.1998
(51) Int. Cl.: G05D 7/01, E02B 7/18

(54) **Device for controlling a liquid flow**
Vorrichtung zur Regelung des Durchflusses einer Flüssigkeit
Dispositif pour la régulation du débit d'un fluide

(30) Priority: 25.02.1997 NL 1005369
(43) Date of publication of application: 10.10.2001
(62) Divisional of application: 98908306.8
(73) Proprietor: Bouwkamp, Gertjan, Roelof, 5671 XJ Nuenen (NL)
(72) Inventor: Bouwkamp, Gertjan, Roelof, 5671 XJ Nuenen (NL)
(74) Representative: Valkonet, Rutger

(56) References cited:
- DE-B- 1 296 845
- DE-C- 973 002
- FR-A- 1 367 596
- FR-A- 1 406 918
- FR-A- 2 186 611
- GB-A- 827 001
- PATENT ABSTRACTS OF JAPAN vol. 008, no. 148 (M-308), 11 July 1984 (1984-07-11) & JP 59 044417 A (HOUKOKU KOGYO KK), 12 March 1984 (1984-03-12)

## Description

The invention relates to a device for controlling a liquid flow.

The invention furthermore relates to a gas pressure delivery system for use in a device according to the invention.

Usually a mechanical device, such as a valve, a stop valve, a flow controller or a level controller is used for controlling a liquid flow.

One drawback of the use of such a mechanical device is that in the long run it will not operate properly anymore, due to the deposition of dirt or due to corrosion. Deposited dirt will prevent a valve from shutting off properly, and a flow controller will regulate a flow other than the desired flow . Corrosion may cause pivots to get stuck or packings to become rust-bound, as a result of which the valves in which said pivots or packings are present will no longer operate properly. Also wear may prevent mechanical devices from operating properly. Mechanical devices are liable to malfunction, therefore, and require a great deal of maintenance. This is problematic in particular when said devices form part of systems which are not easily accessible, such as sewage systems or pipes under dikes. In those cases repairs are often difficult to carry out, are time-consuming and costly. Furthermore, mechanical devices are expensive. Especially large devices, such as weirs, which up to now required large and heavy movable liquid-retaining constructions, which necessitated the use of heavy-duty control elements are expensive.

Such device is known from the German patent publication DE-C-973 002. In this device the pressure chamber has a connection with the atmosphere, that is dependent on the liquid level in the upstream inner vessel such that the connection is open when said liquid level is below a predetermined level and vice versa, thus keeping the flow speed constant.

The drawback of this device is that there is always a flow passing through the device, but is not possible to cut off or block the flow dependent on the liquid level.

One object of the invention is to provide a device for controlling a liquid flow which requires very little maintenance, which is reliable and easy to operate, and which is preferably inexpensive.

The device according to the invention is characterized in that the device is configured such that a liquid flow being passed through the device during operation can be controlled by means of a gas pressure.

Hardly any moving part is required, if at all, because a gas pressure is used for controlling the liquid flow, as a result of which the device requires little maintenance and is not very liable to malfunction.

The invention is based on the insight that a gas is capable of displacing a liquid. The through-flow can be increased, reduced or stopped by locally introducing or discharging a gas into or from a predetermined part of a liquid pipe.

One embodiment of the device according to the invention comprises a bent pipe portion. Said pipe portion is preferably disposed in the device in such a manner that the bend in said pipe portion is positioned higher than the rest. Thus there is a higher portion, in which a gas may be present. Gas is lighter than liquid, and will thus rise in liquid. An atmospheric pressure, an underpressure or an overpressure may prevail in said bend. The ends of the pipe portion may be disposed in different reservoirs, for example, enabling to control a liquid flow between said reservoirs.

Another embodiment of the device according to the invention has a pipe portion which comprises more than one bend, so that it forms a system of communicating vessels. This makes it possible to control the liquid with extra precision. This device may be suitably incorporated in a system of pipes. The length of the various parts of the system of communicating vessels may be adapted to the dimension and the vertical position of the pipes of the system in which the device is incorporated, as a result of which the desired shutting-off action and flow control can take place with extra precision. This embodiment of the device according to the invention can be realised in several manners. Most of said manners will result in a device which is not dependent on energy being supplied.

Another embodiment of the device according to the invention comprises a bent pipe portion, which comprises a wall in which an opening is present, through which opening a gas can be introduced or carried off. This provision enables an even better control of the liquid flow. The gas pressure that is applied can be adapted to the dimensions and the location of the pipes of the system in which the device is incorporated.

The gas pressure is preferably delivered by means of a gas pressure delivery system which is controlled by means of a liquid flow. In that case the system will comprise few moving parts, as a result of which the system requires little maintenance and is not very liable to malfunction and is practically independent of the supply of energy. The gas pressure delivery system may for example comprise a container which is in open communication on one side with a liquid reservoir (which may also form part of a pipe) in which the level of liquid can be varied. In such a manner a pressure can be generated. The container contains gas during operation and, as already said before, it is in open communication with a liquid reservoir and, on the side where no liquid is present, with a pipe whose diameter is much smaller than that of the container. When the level of the liquid in the liquid reservoir rises, gas will be carried off through the pipe. As a result of the difference in diameter between the container and the pipe, a relatively small rise of the liquid level will result in a large amount of gas being carried off. The advantage of such a system is that it is simple to install. The flow through the pipe determines the gas pressure that is generated.

In another embodiment of said gas pressure delivery system the container is shut off from the pipe by means of one or more spring-suspended plates. This has the advantage that no liquid can find its way into the gas pipe.

In another embodiment two plates are present, one plate having a larger area than the other, which plates are interconnected. Preferably said plates are rigidly interconnected. One advantage of this embodiment is the fact that a relatively small pressure on the larger plate is capable of compensating a relatively large pressure on the smaller plate. This makes it possible to generate a large gas pressure by means of a small increase of the flow through the pipe.

The device according to the invention can be used advantageously for controlling liquid flows in a sewage system. With this type of system there is a great risk of dirt being deposited, since the system is used for carrying off dirt. Moreover, a sewage system is very difficult to gain access to, because it is located deep under the ground surface. The device according to the invention exhibits hardly any fouling, since there is hardly any deposition of dirt, and furthermore it requires almost no maintenance. This makes the device according to the invention highly suitable for this use. The device may for example be used for protecting against backflow in a sewage system in a cellar, for limiting the flow in sewage chains, and for separating rain water into highly polluted rain water and less polluted rain water. Said rain water may be discharged separately to a foul sewer and a clean sewer respectively.

The invention will be explained and elucidated hereafter with reference to the following Figures.

Similar parts are numbered alike in the various Figures.

Figure 1 is a diagrammatic longitudinal section of an embodiment of the device according to the invention, which functions as a flow controller.

Figure 2 is a diagrammatic longitudinal section of an embodiment of the device according to the invention, which functions as a flow controller.

Figure 3 is a diagrammatic cross-section of an embodiment of the device according to the invention as shown in Figure 1, which is installed in a sewage drain.

Figure 4 is a diagrammatic cross-section of an embodiment of the device according to the invention as shown in Figure 2, which is installed in a sewage drain.

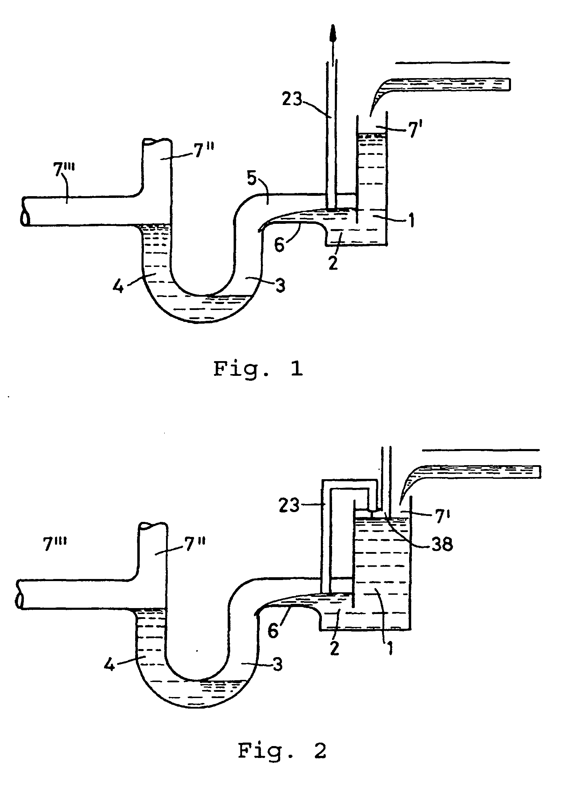

Figure 1 is a diagrammatic longitudinal section of an embodiment of the device according to the invention, which functions as a flow controller. The device comprises an outer pressure vessel (1), an inner pressure vessel (2), an inner back pressure vessel (3), an outer back pressure vessel (4), and a pressure chamber (5). The pressure chamber (5) comprises a flow threshold (6). The device comprises inlets (7', 7", 7'") and a breather tuber (23). Liquid can flow into or out of the system via said inlets. Gas is supplied into the pressure chamber by the liquid flow. The liquid is poured into the outer pressure vessel (1) from a height. The resulting turbulence will introduce air bubbles into the liquid, which air bubbles are carried to the pressure chamber (5) with the flow. The breather tube (23) ensures that the liquid level above the flow threshold will be constant. If the level of the liquid above the bottom side of the breather tube (23) rises, said tube will be shut off. The excess gas cannot escape in that case, as a result of which the pressure in the pressure chamber (5) will rise. This pressure increase will cause the liquid level in the pressure chamber to fall, until it has fallen to a level below the bottom side of the breather tube. In that situation the breather tube will no longer be shut off, as a result of which gas will escape from the pressure chamber (5), the pressure will decrease and the liquid level will rise again. Thus the liquid level in the pressure chamber will remain substantially the same as the level of the bottom side of the breather tube (23). Also the flow will remain constant in this manner. The flow can be varied by varying the position of the bottom side of the breather tube (23).

Figure 2 is a diagrammatic longitudinal section of an embodiment of the device according to the invention, which functions as a flow controller. The device functions in substantially the same manner as the device shown in Figure 1. This embodiment comprises a valve (38), which valve is capable of shutting off the breather tube (23). When the liquid level in the outer pressure vessel (1) is so high that the breather tube (23) is shut off from the atmosphere, the pressure chamber (5) will also be shut off from the atmosphere. In that case the air being introduced into the pressure chamber (5) cannot escape via the breather tube (23) anymore. The pressure in the pressure chamber (5) will gradually rise. Eventually it will be so high that no liquid will flow over the liquid threshold (6) anymore. The outer pressure vessel (1) and the outer back pressure vessel (4) may also be any type of liquid reservoir, a lake, a pond or a river.

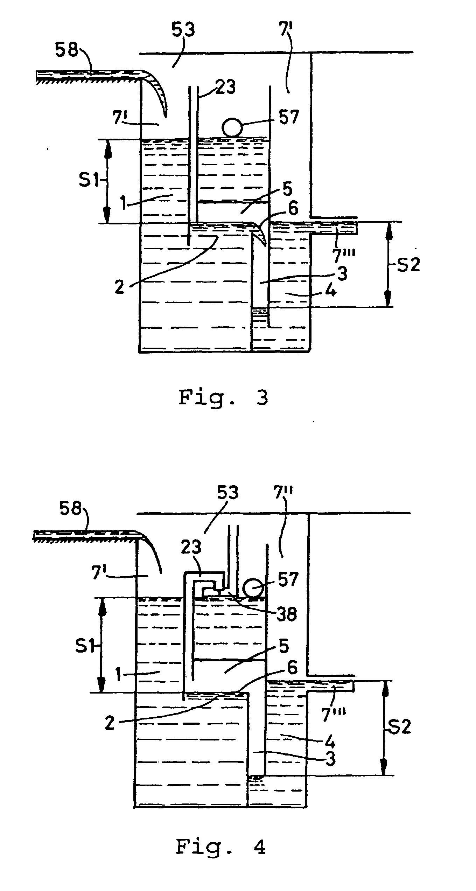

Figure 3 is a diagrammatic cross-section of an embodiment of the device according to the invention as shown in Figure 1, which is installed in a sewage drain (53). The parts used are the same as in Figure 1, with the addition of a discharge sewer (57). The device functions to limit the flow through inlet 7''' to a predetermined value. If the supply of sewage water is larger than this flow, the sewage water level in the drain (53) will rise. Once said level has exceeded a predetermined value, the sewage water will be discharged through the discharge sewer. The first rain water that falls is much more polluted than the rain that falls later. The illustrated device makes it possible to separate these two types of water. The first rain water that falls, which is polluted, is discharged via inlet 7"', which is connected to a water purification plant. The cleaner rain water that falls later can be led elsewhere via the discharge sewer (57). It may be filtrated into the ground, for example.

Figure 4 is a diagrammatic cross-section of an embodiment of the device according to the invention as shown in Figure 2, which is installed in a sewage drain (53). The parts used are the same as in Figure 2, with the addition of a discharge sewer (57) and a surface (58), such as a street. The operation of the device will be the same as that of the device shown in Figure 3 as long as the liquid level in the sewage drain (53) remains below a predetermined value. When the liquid level in the sewage drain (53) exceeds that value, the valve (38) will shut off the breather tube (23). The pressure chamber (5) will no longer be in communication with the atmosphere in that case, and the discharge via inlet 7''' will be stopped.

## Claims

1. A device for controlling a liquid flow passing through the device, which device forms a system of communicating vessels comprising a pressure chamber (5) with a flow threshold (6), an outer vessel (1) and an inner vessel (2) placed upstream from the pressure chamber and an inner vessel (3) and an outer vessel (4) placed downstream from the pressure chamber, whereby during operation the liquid flow can be controlled by means of the pressure of a gas present in the pressure chamber, **characterized in that** gas for creating a pressure in the pressure chamber is transported into the pressure chamber due to the liquid flow entering the device and that first means are present, which allow the entry of gas into the pressure chamber.

2. A device according to claim 1, **characterized in that** said first means are formed by the connection between the outer and inner upstream vessel, wherein the highest point of said connection lies above the lowest point to which gas can be transported by the turbulence of the liquid flow.

3. A device according to claim 1 or 2, **characterized in that** the highest point of the connection between the outer and inner upstream vessel lies well above the threshold.

4. A device according to one or more of the preceeding claims, **characterized in that** means (23) are present, which permit the discharge of gas from the pressure chamber.

5. A device according to claim 4, **characterized in that** the means comprise at least one opening.

6. A device according to claim 5, **characterized in that** the opening is placed in a wall of the pressure chamber above the threshold.

7. A device according to claim 5, **characterized in that** the opening is formed by means of the connection between the inner upstream vessel and the outer upstream vessel.

8. A device according to one or more of the preceeding claims, **characterized in that** a opening is present in a wall of the outer upstream vessel.

9. A device according to one or more of the preceeding claims incorporated in a dyke, a sewage drain or the like.

## Patentansprüche

1. Vorrichtung zur Regelung des Durchflusses einer Flüssigkeit durch diese Vorrichtung, wobei die Vorrichtung ein System kommunizierender Gefäße bildet, bestehend aus einer Druckkammer (5) mit einer Durchfluss-Schwelle (6), einem äußeren Gefäß (1) und einem inneren Gefäß (2), die im Vorlauf der Druckkammer angebracht sind und einem inneren Gefäß (3) und einem äußeren Gefäß (4), die im Nachlauf der Druckkammer angebracht sich, wobei während des Betriebs der Durchfluss der Flüssigkeit mittels des anwesenden Drucks des Gases in der Druckkammer geregelt wird, **gekennzeichnet dadurch, dass** ein Gas das einen Gasdruck in der Druckkammer erzeugt abhängig vom Durchfluss der Flüssigkeit, der in die Vorrichtung eintritt und ein erstes Mittel, welche anwesend sein müssen, um den Eintritt von Gas in die Druckkammer zu ermöglichen.

2. Vorrichtung nach Anspruch 1, **gekennzeichnet dadurch, dass** das erste Mittel ausgeformt wird durch eine Verbindung zwischen dem äußeren und inneren Vorlaufgefäß, wobei der höchste Punkt der Verbindung oberhalb des niedrigsten Punktes liegt, zu dem das Gas durch die turbulente Strömung des Durchflusses der Flüssigkeit transportiert werden kann.

3. Vorrichtung nach Anspruch 1 oder 2, **gekennzeichnet dadurch, dass** der höchste Punkt der Verbindung zwischen dem inneren und äußeren Vorlaufgefäß wohl über der Schwelle liegt.

4. Vorrichtung nach einem oder mehreren der vorgegangenen Ansprüche, **gekennzeichnet dadurch, dass** Mittel (23) anwesend sind, die ein Austreten von Gas aus der Druckkammer zulassen.

5. Vorrichtung nach Anspruch 4, **gekennzeichnet dadurch, dass** das Mittel zumindest eine Öffnung hat.

6. Vorrichtung nach Anspruch 5, **gekennzeichnet dadurch, dass** die Öffnung in einer Wand der Druckkammer oberhalb der Schwelle liegt.

7. Vorrichtung nach Anspruch 5, **gekennzeichnet dadurch, dass** die Öffnung geformt wird durch das Mittel der Verbindung zwischen dem inneren Vorlaufgefäß und dem äußeren Vorlaufgefäß.

8. Vorrichtung gemäß einem oder mehreren der vorgegangenen Ansprüche, **gekennzeichnet dadurch, dass** eine Öffnung in dem äußeren Vorlaufgefäß vorhanden ist.

9. Vorrichtung gemäß einem oder mehreren der vorgegangenen Ansprüche, eingebaut in einen Deich, einem Abwasserablauf.

## Revendications

1. Dispositif pour réguler un écoulement de liquide passant à travers lui, dispositif qui forme un système de vases communicants comportant une chambre de pression (5) ayant un seuil d'écoulement (6), un récipient extérieur (1) et un récipient intérieur (2) placés en amont de la chambre de pression et un récipient intérieur (3) et un récipient extérieur (4) placés en aval de la chambre de pression, pour qu'ainsi, en fonctionnement, l'écoulement de liquide puisse être régulé au moyen de la pression d'un gaz présent dans la chambre de pression, **caractérisé en ce que** le gaz destiné à créer une pression dans la chambre de pression est entraîné dans celle-ci sous l'effet de l'entrée de l'écoulement de liquide dans le dispositif, et **en ce qu'**il existe des premiers moyens permettant l'entrée du gaz dans la chambre de pression.

2. Dispositif selon la revendication 1, **caractérisé en ce que** lesdits premiers moyens sont formés par la liaison entre les récipients extérieur et intérieur amont, le point le plus élevé de ladite liaison se situant au-dessus du point le plus bas où le gaz peut être entraîné par la turbulence de l'écoulement de liquide.

3. Dispositif selon la revendication 1 ou 2, **caractérisé en ce que** le point le plus élevé de la liaison entre les récipients extérieur et intérieur amont se situe bien au-dessus du seuil.

4. Dispositif selon l'une au moins des revendications précédentes, **caractérisé en ce qu'**il existe des moyens (23) permettant l'évacuation du gaz hors de la chambre de pression.

5. Dispositif selon la revendication 4, **caractérisé en ce que** les moyens comportent au moins une ouverture.

6. Dispositif selon la revendication 5, **caractérisé en ce que** l'ouverture est placée dans une paroi de la chambre de pression, au-dessus du seuil.

7. Dispositif selon la revendication 5, **caractérisé en ce que** l'ouverture est formée par la liaison entre le récipient intérieur amont et le récipient extérieur amont.

8. Dispositif selon l'une au moins des revendications précédentes, **caractérisé en ce qu'**une ouverture est présente dans une paroi du récipient extérieur amont.

9. Dispositif selon l'une au moins des revendications précédentes, incorporé dans une digue ou une canalisation d'égout, par exemple.
